# EUROPÄISCHE PATENTSCHRIFT

(11) **EP 0 945 211 B1**
(45) Veröffentlichungstag und Bekanntmachung des Hinweises auf die Patenterteilung: **05.01.2005**
(21) Anmeldenummer: 99101649.4
(22) Anmeldetag: 05.02.1999
(51) Int. Cl.: B23P 19/06, F16D 3/04

(54) **Adapter zur drehfesten Verbindung eines Werkzeugs mit einer in einer Adapterlängsachse wirkenden Drehantriebseinrichtung**
Adapter for a non-rotary connection between a tool and a torque delivering device acting in the longitudinal axis of the adapter
Adaptateur pour une connection non-rotative entre un outil et un dispositif d'entraînement en rotation agissant dans l'axe longitudinale de l'adaptateur

(30) Priorität: 23.03.1998 DE 19812654
(43) Veröffentlichungstag der Anmeldung: 29.09.1999
(73) Patentinhaber: Volkswagen Aktiengesellschaft, 38436 Wolfsburg (DE)
(72) Erfinder: Schweiger, Alfred, 38448 Wolfsburg (DE)
(74) Vertreter: Scheffler, Jörg, Dipl.-Ing.

(56) Entgegenhaltungen:
- EP-A- 0 368 813
- GB-A- 613 788
- US-A- 1 027 520
- US-A- 3 454 283
- US-A- 3 931 720
- US-A- 4 547 101

## Beschreibung

Die Erfindung betrifft einen Adapter zur drehfesten Verbindung eines Werkzeugs, insbesondere eines Schraubwerkzeugs, mit einer in einer Adapterlängsachse wirkenden Drehantriebseinrichtung, insbesondere einer Schrauberspindel, gemäß dem Oberbegriff des Anspruches 1.

Beim automatisierten Verschrauben von Teilen, beispielsweise im Kraftfahrzeugbau, kann das Problem auftreten, daß Schrauben mittels Roboter oder Sonderverschraubungsmaschinen nicht exakt fluchtend zum dazugehörigen Schraubenloch positioniert sind, wenn beispielsweise das Schraubenloch aufgrund einer nicht exakten Fertigung sich nicht genau an der vorgesehenen Stelle befindet. Wird das Schraubenloch nicht exakt getroffen, so kann dies zu Fehlermeldungen und zu einer Unterbrechung des Schraubvorganges führen. Weiterhin kann nicht ausgeschlossen werden, daß Teile beschädigt werden.

Um diese Probleme zu vermeiden, ist daher bereits vorgeschlagen worden, Roboter oder Sonderverschraubungsmaschinen mit Sensoren zum Auffinden der Schraubenlöcher und gekoppelten automatisch gesteuerten Positionierungseinrichtungen auszustatten. Diese Einrichtungen verteuern die Geräte allerdings erheblich.

Aus der EP-A-0368813 ist bereits ein Schraubendreher bekannt, bei dem ein Schrauberkupplungsteil innerhalb eines Gehäuses etwas gekippt werden kann, um entsprechende Fluchtungsfehler auszugleichen. Diese bekannte Vorrichtung bewirkt aber ein schräges Verkippen der Drehachse gegenüber der Schraublochachse, was ungünstig ist. Außerdem benötigt sie viel Platz und ist relativ kompliziert aufgebaut.

Demgegenüber ist bei einem gattungsgemäßen Adapter aufgrund der beiden Schiebeführungen das Werkzeugkupplungsteil radial schwimmend innerhalb des Gehäuseteiles gelagert. Auf diese Weise kann die Drehbewegung der Drehantriebseinrichtung auch dann auf das Werkzeug, beispielsweise eine Schraubemuß, übertragen werden, wenn die Längsachse des Werkzeugkupplungsteiles zu derjenigen des Drehantriebskupplungsteiles seitlich versetzt ist. Weiterhin ermöglicht der Adapter einen parallelen Versatz dieser beiden Längsachsen, ohne daß ein schräges Verkippen der Werkzeugkupplungsteil-Längsachse auftritt.

Die US-A-4547101 beschreibt bereits einen solchen Adapter zur drehfesten Verbindung eines Werkzeugs mit einer in einer Adapterlängsachse wirkenden Drehantriebseinrichtung, bestehend aus einem an der Drehantriebseinrichtung befestigbaren Drehantriebskupplungsteil, einem Gehäuseteil und einem Werkzeugkupplungsteil, das über ein Zwischenstück drehfest mit dem Drehantriebskupplungsteil verbunden ist. Das Zwischenstück ist mit dem Drehantriebskupplungsteil mittels einer ersten Schiebeführung gekoppelt, die ein Verschieben des Zwischenstücks in einer ersten Richtung quer zur Adapterlängsachse ermöglicht, und das Werkzeugkupplungsteil ist mit dem Zwischenstück mittels einer zweiten Schiebeführung gekoppelt, die ein Verschieben des Werkzeugkupplungsteils relativ zum Zwischenstück quer zur Adapterlängsachse in einer zweiten Richtung senkrecht zur ersten Richtung ermöglicht. Die Zentrierung des Drehantriebskupplungsteils gegenüber dem Werkzeugkupplungsteil wird dabei durch elastische Ringe erreicht, die einer Querverschiebung durch ihre elastische Rückstellkraft entgegenwirken.
Bei einem gattungsgemäßen Adapter gemäß der GB 613 788 wird diese Zentrierung durch Schraubenfedern erreicht, die sich innen am Gehäuse abstützen.

Schiebeführungen zum Ausgleich eines Querversatzes bei Adaptern sind ferner auch durch die US-A-3 454 283, die US-A 3 931 720 sowie die US-A-1 027 520 bekannt.

Der Erfindung liegt die Aufgabe zugrunde, einen Adapter der eingangs genannten Art zu schaffen, bei dem die Zentrierung vereinfacht ist.

Diese Aufgabe wird erfingdungsgemäß durch die Merkmale des Anspruches 1 dadurch gelöst, daß im Gehäuseteil sich zum Werkzeugkupplungsteil hin erstreckende, vorgespannte Steckbolzen radial verschiebbar geführt sind, von denen das Werkzeugkupplungsteil in eine zentrierte Lage innerhalb des Gehäuseteiles gedrängt wird. Diese Steckbolzen liegen mit Federvorspannung am Werkzeugkupplungsteil an, wobei die Vorspannkraft zweckmäßigerweise von einem in Umfangsrichtung des Gehäuseteils umlaufenden Gummiring erzeugt wird, der über die Steckbolzen geführt ist.

Gemäß einer vorteilhaften Ausführungsform weist das Drehantriebskupplungsteil einen stimseitig vorspringenden Verbindungssteg auf, der in eine erste Quemut des Zwischenstegs eingreift. Das Werkzeugkupplungsteil weist hierbei einen stimseitig vorspringenden Kopplungssteg auf, der in eine zweite, zur ersten Quemut nicht parallel, insbesondere senkrecht liegende Quernut des Zwischenstücks eingreift. Diese Ausführungsform ist besonders einfach und kostengünstig herstellbar und darüber hinaus geeignet, auch große Drehmomente zu übertragen.

Die Erfindung wird nachfolgend anhand der Zeichnungen beispielhaft näher erläutert. In diesen zeigen:
- Figur 1:: Eine größtenteils geschnitten dargestellte Seitenansicht des erfindungsgemäßen Adapters,
- Figur 2:: eine teilweise geschnitten dargestellte, um 90° verdrehte Seitenansicht des Adapters von Figur 1,
- Figur 3:: eine Seitenansicht des Adapters von Figur 1,
- Figur 4:: eine Explosionsdarstellung des Adapters von Figur 1,
- Figur 5:: eine Unteransicht des Gehäuseteils,
- Figur 6:: einen Längsschnitt duch das Gehäuseteil von Figur 5,
- Figur 7:: eine Seitenansicht des Werkzeugkupplungsteils,
- Figur 8:: einen mittigen Längsschnitt durch das Zwischenstück, und
- Figur 9:: eine teilweise geschnitten dargestellte Seitenansicht des Drehantriebskupplungsteils.

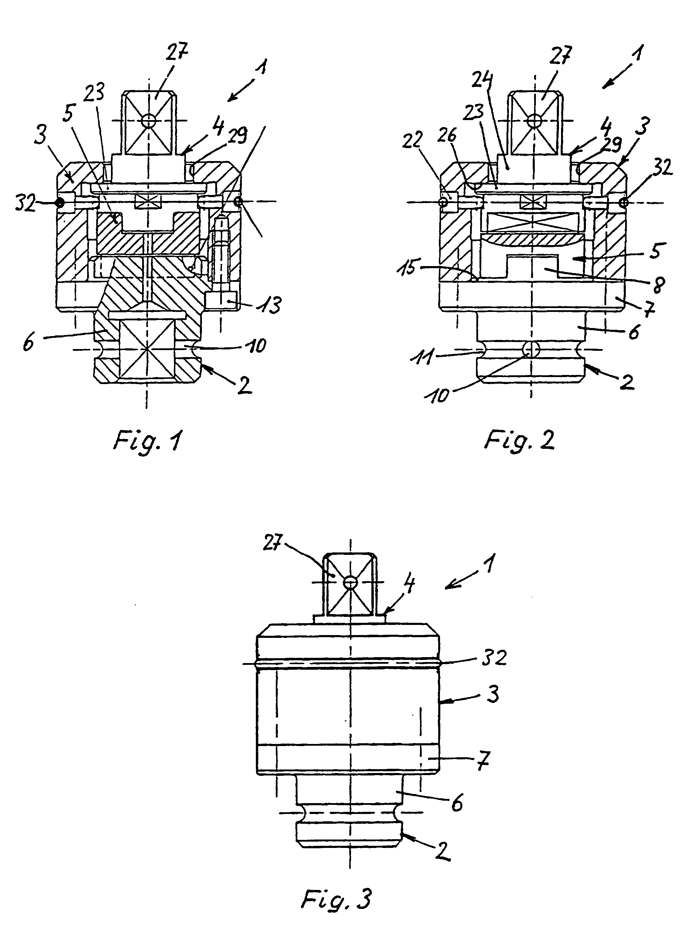

Der in den Figuren 1 bis 3 gezeigte Adapter 1 dient zum Befestigen eines nicht dargestellten Werkzeugs in Form einer Schraubernuß, die eine eingesteckte Schraube selbsttätig hält, an einer ebenfalls nicht dargestellten Drehantriebseinrichtung in Form einer Schrauberspindel, die beispielsweise Teil eines Roboters sein kann. Die Schraubernuß wird hierbei auf das in den Figuren 1 bis 3 gezeigte obere Ende des Adapters 1 aufgesteckt, während der Adapter 1 selbst mit seinem unteren Ende auf die Schrauberspindel aufgesteckt wird.

Der Adapter 1 besteht im wesentlichen aus einem Drehantriebskupplungsteil 2, einem am Drehantriebskupplungsteil 2 befestigten Gehäuseteil 3 sowie einem innerhalb des Gehäuseteils 3 radial schwimmend gelagerten Werkzeugkupplungsteil 4, das über ein quer verschiebbares Zwischenstück 5 drehfest mit dem Drehantriebskupplungsteil 2 verbunden ist.

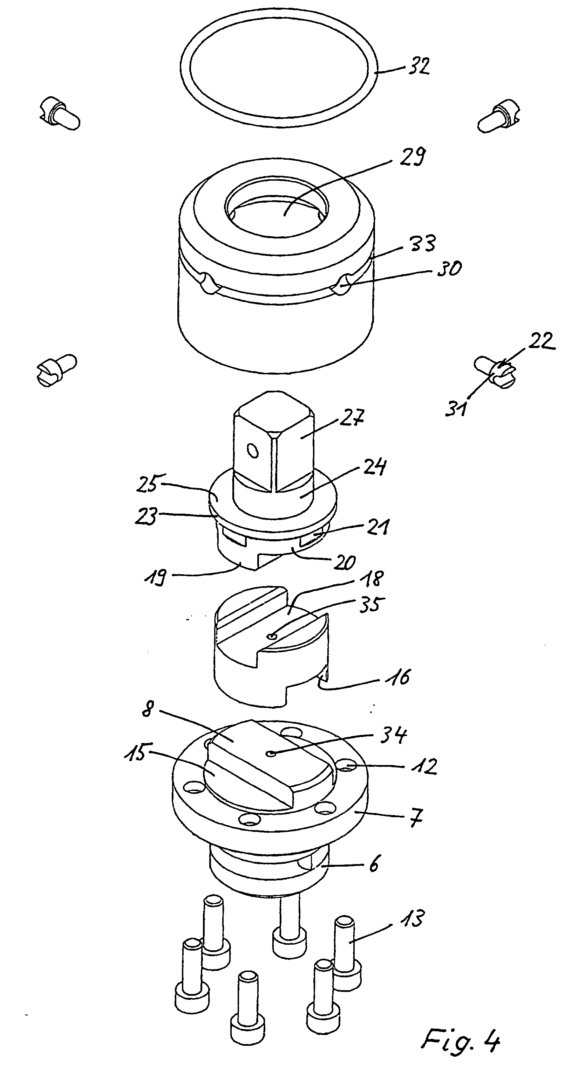

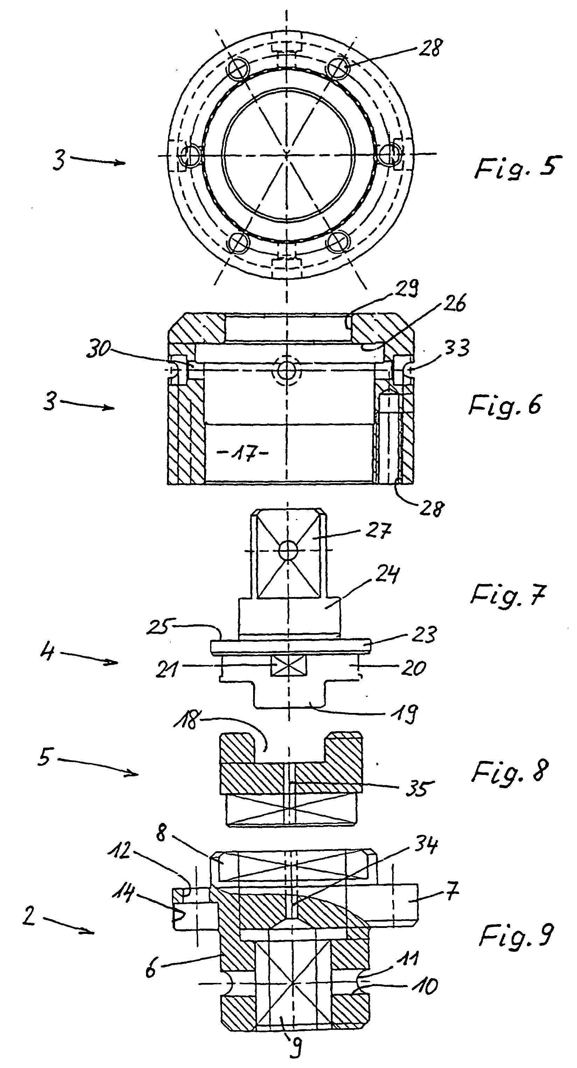

Wie insbesondere aus den Figuren 4 und 9 ersichtlich, ist das Drehantriebskupplungsteil 2 im wesentlichen rotationssymmetrisch ausgebildet und weist einen zylinderförmigen Basisabschnitt 6, einen über den Basisabschnitt 6 radial nach außen vorspringenden zylinderförmigen Flanschabschnitt 7 und einen Verbindungssteg 8 auf, der stirnseitig über den Flanschabschnitt 7 vorsteht.

Im Inneren des Basisabschnitts 6 ist eine zentrale Innenvierkantbohrung 9 eingebracht, die zur Aufnahme eines entsprechenden, nicht dargestellten Vierkantbolzens der antreibenden Schrauberspindel dient. Zur axialen Sicherung am Schrauberspindel-Vierkantbolzen ist im Basisabschnitt 6 eine durchgehende Querbohrung 10 vorgesehen, durch die ein entsprechender Sicherungsstift gesteckt werden kann. Dieser Sicherungsstift wird durch einen nicht dargestellten O-Ring am Herausfallen gehindert, der in eine sich über die Querbohrung 10 erstreckende Umfangsnut 11 eingelegt werden kann.

Wie aus Figur 4 ersichtlich, weist der Flanschabschnitt 7 sechs regelmäßig über seinen Umfang verteilte, parallel zur Längsachse des Drehantriebskupplungsteils 2 liegende Durchgangsbohrungen 12 auf, die zur Aufnahme entsprechender Inbusschrauben 13 (Figuren 1, 4) dienen. Von der Seite des Basisabschnitts 6 her sind die Durchgangsbohrungen 12 mittels Senkbohrungen 14 (Figur 9) derart erweitert, daß die Schraubenköpfe der Inbusschraube 13 vollkommen innerhalb des Flanschabschnitts 7 versenkt sind. Die Inbusschrauben 13 dienen zum festen Verbinden des Drehantriebskupplungsteils 2 mit dem Gehäuseteil 3, das ebenfalls im wesentlichen rotationssymmetrisch ausgebildet und stirnseitig auf den Flanschabschnitt 7 aufgesetzt ist. Ein kurzer, stirnseitig über den Flanschabschnitt 7 überstehender zylinderförmiger Zentrierbund 15 (Figuren 2 und 4) liegt hierbei an der Innenseite des Gehäuseteils 3 an und zentriert dieses bezüglich der Rotationsachse.

Der Verbindungssteg 8 dient dazu, das Zwischenstück 5 innerhalb des das Zwischenstück 5 außenseitig umgebenden Gehäuseteils 3 quer verschiebbar, aber drehfest mit dem Drehantriebskupplungsteil 2 zu verbinden. Hierzu ist der Verbindungssteg 8 mittig auf dem Zentrierbund 15 angeordnet, wobei er sich quer über den gesamten Durchmesser des Zentrierbunds 15 erstreckt. Die zwei Seitenflächen des Verbindungsstegs 8 sind zueinander parallel angeordnet und weisen voneinander einen Abstand auf, der etwa der Hälfte des Durchmessers des Zentrierbunds 15 entspricht.

Wie aus den Figuren 2 und 4 ersichtlich, greift der Verbindungssteg 8 des Drehantriebskupplungsteils 2 in eine entsprechend dimensionierte erste Quernut 16 des Zwischenstücks 5 ein, die an einer Stirnseite des Zwischenstücks 5 angeordnet ist und sich über dessen gesamten Durchmesser erstreckt. Die Breite dieser ersten Quernut 16 ist geringfügig größer als diejenige des Verbindungsstegs 8, so daß sich das Zwischenstück 5 quer zur Adapterlängsachse längs des Verbindungsstegs 8 verschieben läßt. Damit eine derartige Querverschiebung innerhalb des Gehäuseteils 3 möglich ist, weist das Gehäuseteil 3 einen mittigen, zylinderförmigen inneren Hohlraum 17 (Figur 6) auf, dessen Durchmesser größer als der Außendurchmesser des ebenfalls im wesentlichen zylinderförmigen Zwischenstücks 5 ist.

Auf der der ersten Quernut 16 gegenüberliegenden Stirnseite des Zwischenstücks 5 ist eine zweite Quernut 18 vorgesehen, die im wesentlichen in gleicher Weise wie die erste Quernut 16 ausgebildet, zu dieser jedoch in einem Winkel von 90° angeordnet ist. Die beiden Quernuten 16, 18 kreuzen sich somit rechtwinklig, weisen in Längsrichtung des Zwischenstücks 5 jedoch einen Abstand auf, der etwa der Tiefe einer Quernut 16, 18 entspricht.

Die zweite Quernut 18 dient zur Aufnahme eines Kopplungsstegs 19 (Figur 1, 7), der stirnseitig am Werkzeugkupplungsteil 4 vorgesehen und längs der zweiten Quernut 18 verschiebbar ist. Über den Kopplungssteg 19 ist das Werkzeugkupplungsteil 4 somit drehfest mit dem Zwischenstück 5 verbunden, gleichzeitig jedoch quer zur Adapterlängsachse in einer Richtung verschiebbar, die um 90° zur Verschieberichtung des Zwischenstücks 5 versetzt ist.

An den Kopplungssteg 19 des Werkzeugkupplungsteils 4 schließt sich ein im wesentlichen zylinderförmiger Zentrierabschnitt 20 an. Dieser Zentrierabschnitt 20 weist an seinem Außenumfang vier regelmäßig in Umfangsrichtung verteilte Abflachungen 21 auf, an denen die inneren Stirnseiten von radial ausgerichteten, später noch näher beschriebenen Steckbolzen 22 anliegen, welche das Werkzeugkupplungsteil 4 mittig innerhalb des Gehäuseteils 3 zu halten versuchen (Figuren 1, 2). Ein in Axialrichtung anschließender zylinderförmiger Halteabschnitt 23 weist einen deutlich größeren Durchmesser als ein nachfolgender Übergangsabschnitt 24 auf, so daß am Halteabschnitt 23 eine Schulter 25 (Figur 7) ausgebildet ist. Diese Schulter 25 übergreift eine senkrecht zur Adapterlängsachse liegende innere Lagerfläche 26 des Gehäuseteils 3 (Figuren 1, 2) und legt damit das Werkzeugkupplungsteil 4 innerhalb des Gehäuseteils 3 in einer axialen Richtung fest. An den zylinderförmigen Übergangsabschnitt 24 schließt sich ein normierter Vierkantabschnitt 27 mit quadratischem Querschnitt an, auf dem die nicht dargestellte Schraubernuß in bekannter Weise aufgesteckt werden kann.

Das in den Figuren 5 und 6 dargestellte Gehäuseteil 3 ist im wesentlichen napfförmig ausgebildet und weist einen Außendurchmesser auf, der demjenigen des Flanschabschnittes 7 des Drehantriebskupplungsteils 2 entspricht. In der Seitenwand des Gehäuseteils 3 sind mit den Durchgangsbohrungen 12 des Flanschabschnittes 7 fluchtende Gewindebohrungen 28 zum Einschrauben der Imbusschrauben 13 vorgesehen. Die radial nach innen verlaufende Stimwand des Gehäuseteils 3 weist eine zentrale Durchgangsöffnung 29 mit einem Durchmesser auf, der um ein vorbestimmtes Maß größer ist als der Außendurchmesser des durch die Durchgangsöffnung 29 sich hindurch erstreckenden Übergangsabschnittes 24 des Werkzeugkupplungsteils 4. Dies ermöglicht ein radiales Schwimmen des Werkzeugkupplungsteils 4, d.h. eine Bewegung quer zur Adapterlängsachse, ohne die Durchgangsöffnung 29 zu berühren.

Die vier über den Umfang des Gehäuseteils 3 regelmäßig verteilten radialen Steckbolzen 22 sind längsverschiebbar in entsprechenden Radialbohrungen 30 in der Seitenwand des Gehäuseteils 3 aufgenommen. Sie stehen nach innen so weit in den Hohlraum 17 des Gehäuseteils 3 vor, daß sie in der zentrierten Lage des Werkzeugkupplungsteils 4 gleichzeitig an den Abflachungen 21 des Zentrierabschnittes 20 anliegen. Der Verschiebeweg der Steckbolzen 22 nach innen wird hierbei durch einen Kopfabschnitt 31 größeren Durchmessers begrenzt, der an einer Schulter der Gehäuseteil-Radialbohrungen 13 anliegt.

Mittels eines umlaufenden Gummirings 32 (Figuren 1 bis 4), der in eine entsprechende, auch über die Steckbolzen 22 verlaufende Außenumfangsnut 33 eingelegt ist, werden die Steckbolzen 22 kontinuierlich radial nach innen in die in den Figuren 1 und 2 gezeigte Stellung vorgespannt.

Fluchtet die Längsachse des Werkzeugs, d.h. der Schraubernuß, nicht mit derjenigen des Drehantriebskupplungsteils 2, kann das Werkzeugkupplungsteil 4 aus seiner zentralen Lage innerhalb seines Gehäuseteils 3 seitlich ausgelenkt werden, wobei die Steckbolzen 22 abwechselnd entgegen der Vorspannkraft des Gummiringes 32 radial nach außen geschoben werden. Hierbei verschieben sich der Kopplungssteg 19 innerhalb der zweiten Quernut 18 und der Verbindungssteg 8 innerhalb der ersten Quernut 16 des Zwischenstücks 5 quer zur Längsachse des Adapters.

Über eine mittige, auf der Längsachse des Adapters 1 liegende Schmierbohrung 34, 35 im Drehantriebskupplungsteil 2 und Zwischenstück 5 kann Schmiermittel zu den Quernuten 16, 18 und dem Verbindungssteg 8 bzw. Kopplungssteg 19 eingeführt werden.

## Patentansprüche

1. Adapter zur drehfesten Verbindung eines Werkzeugs, insbesondere eines Schraubwerkzeugs, mit einer in einer Adapterlängsachse wirkenden Drehantriebseinrichtung, insbesondere einer Schrauberspindel, bestehend aus einem an der Drehantriebseinrichtung befestigbaren Drehantriebskupplungsteil (2), einem Gehäuseteil (3) und einem Werkzeugkupplungsteil (4), das über ein Zwischenstück (5) drehfest mit dem Drehantriebskupplungsteil (2) verbunden ist, wobei das Zwischenstück (5) mit dem Drehantriebskupplungsteil (2) mittels einer ersten Schiebeführung (8, 16) gekoppelt ist, die ein Verschieben des Zwischenstücks (5) in einer ersten Richtung quer zur Adapterlängsachse ermöglicht, und wobei das Werkzeugkupplungsteil (4) mit dem Zwischenstück (5) mittels einer zweiten Schiebeführung (18, 19) gekoppelt ist, die ein Verschieben des Werkzeugkupplungsteils (4) relativ zum Zwischenstück (5) quer zur Adapterlängsachse in einer zweiten Richtung ermöglicht, die nicht parallel, insbesondere senkrecht zur ersten Richtung liegt, **dadurch gekennzeichnet, daß** im Gehäuseteil (3) sich zum Werkzeugkupplungsteit (4) hin erstreckende, vorgespannte Steckbolzen (22) radial in entsprechenden radialen Durchbrechungen, insbesondere Radialbohrungen (30) verschiebbar geführt sind, von denen das Werkzeugkupplungsteil (4) in eine zentrierte Lage innerhalb des Gehäuseteils (3) gedrängt wird.

2. Adapter nach Anspruch 1, **dadurch gekennzeichnet, daß** das Drehantriebskupplungsteil (2) einen stirnseitig vorspringenden Verbindungssteg (8) aufweist, der in eine erste Quernut (16) des Zwischenstücks (5) eingreift, und daß das Werkzeugkupplungsteil (4) einen stirnseitig vorspringenden Kopplungssteg (19) aufweist, der in eine zweite, zur ersten Quernut (16) nicht parallel, insbesondere senkrecht liegende Quernut (18) des Zwischenstücks (5) eingreift.

3. Adapter nach Anspruch 1 oder 2, **dadurch gekennzeichnet, daß** zur radialen Vorspannung der Steckbolzen (22) ein in Umfangsrichtung des Gehäuseteils (3) umlaufender Gummiring (32) vorgesehen ist, der über die Steckbolzen (22) geführt ist.

4. Adapter nach Anspruch 3, **dadurch gekennzeichnet, daß** der Gummiring (32) in einer Außenumfangsnut (33) des Gehäuseteils (3) geführt ist.

## Claims

1. Adapter for the non-rotational connection of a tool, in particular a screwing tool, comprising a rotary drive device, in particular a screw spindle, acting in a longitudinal axis of the adapter, comprising a rotary drive coupling part (2) that may be fastened to the rotary drive device, a housing part (3) and a tool coupling part (4), which is non-rotationally connected to the rotary drive coupling part (2) via an intermediate part (5), the intermediate part (5) being coupled to the rotary drive coupling part (2) by means of a first sliding guide (8, 16), which facilitates displacement of the intermediate part (5) in a first direction transverse to the longitudinal axis of the adapter, and the tool coupling part (4) being coupled to the intermediate part (5) by means of a second sliding guide (18, 19), which facilitates displacement of the tool coupling part (4) relative to the intermediate part (5) transverse to the longitudinal axis of the adapter, in a second direction, which does not extend parallel to the first direction, and in particular extends perpendicularly thereto, **characterised in that**, in the housing part (3), pretensioned socket pins (22), which extend toward the tool coupling part (4), are displaceably guided in the radial direction, in corresponding radial openings, in particular radial holes (30), from which the tool coupling part (4) is urged into a centred position within the housing part (3).

2. Adapter according to claim 1, **characterised in that** the rotary drive coupling part (2) comprises a connecting web (8) protruding at the front end, which connecting web engages a first transverse groove (16) in the intermediate part (5), and **in that** the tool coupling part (4) comprises a coupling web (19) protruding at the front end, which coupling web engages a second transverse groove (18) in the intermediate part (5), which does not extend parallel to the first transverse groove (16), and in particular extends perpendicularly thereto.

3. Adapter according to claim 1 or claim 2, **characterised in that**, for the radial pretensioning of the socket pins (22), a rubber ring (32) is provided that encircles the housing part (3) in the circumferential direction and is guided over the socket pins (22).

4. Adapter according to claim 3, **characterised in that** the rubber ring (32) is guided in an outer peripheral groove (33) in the housing part (3).

## Revendications

1. Adaptateur pour la liaison solidaire en rotation d'un outil, en particulier d'un outil de vissage, comprenant un dispositif d'entraînement en rotation agissant dans un axe longitudinal de l'adaptateur, en particulier une broche de visseuse, composé d'une partie d'accouplement d'entraînement en rotation (2) qui peut être fixée au dispositif d'entraînement en rotation, d'une partie boîtier (3) et d'une partie d'accouplement d'outil (4) qui est reliée solidairement en rotation à la partie d'accouplement d'entraînement en rotation (2) au moyen d'un élément intermédiaire (5), l'élément intermédiaire (5) étant accouplé à la partie d'accouplement d'entraînement en rotation (2) au moyen d'un premier guidage à coulissement (8, 16) qui permet un coulissement de l'élément intermédiaire (5) dans une première direction transversalement à l'axe longitudinal de l'adaptateur et la partie d'accouplement d'outil (4) étant accouplée à l'élément intermédiaire (5) au moyen d'un deuxième guidage à coulissement (18, 19) qui permet un coulissement de la partie d'accouplement d'outil (4) par rapport à l'élément intermédiaire (5) transversalement à l'axe longitudinal de l'adaptateur, dans une deuxième direction qui n'est pas parallèle à la première direction et qui est en particulier perpendiculaire à la première direction, **caractérisé en ce que**, dans la partie boîtier (3), des tétons mâles (22) précontraints s'étendant vers la partie d'accouplement d'outil (4), sont guidés mobiles en coulissement radial dans des ouvertures radiales correspondantes, en particulier dans des perçages radiaux (30), par lesquels la partie d'accouplement d'outil (4) est poussée dans une position centrée à l'intérieur de la partie boîtier (3).

2. Adaptateur selon la revendication 1, **caractérisé en ce que** la partie d'accouplement d'entraînement en rotation (2) présente une nervure de liaison (8) qui fait saillie côté frontal et qui est engagée dans un première rainure transversale (16) de l'élément intermédiaire (5), et **en ce que** la partie d'accouplement d'outil (4) présente une nervure d'accouplement (19) qui fait saillie sur le côté frontal et qui est engagée dans une deuxième rainure transversale (18) de l'élément intermédiaire (5), qui n'est pas parallèle à la première rainure transversale (16) et qui est en particulier perpendiculaire à celle-ci.

3. Adaptateur selon la revendication 1 ou 2, **caractérisé en ce que**, pour la précontrainte radiale des tétons mâles (22), il est prévu une bague en caoutchouc (32) qui s'étend dans la direction circonférentielle de la partie boîtier (3) et qui est guidée en passant sur les tétons mâles (22).

4. Adaptateur selon la revendication 3, **caractérisé en ce que** la bague en caoutchouc (32) est guidée dans une gorge circonférentielle extérieure (33) de la partie boîtier (3).
